# EUROPÄISCHE PATENTSCHRIFT

(11) **EP 1 467 190 B1**
(45) Veröffentlichungstag und Bekanntmachung des Hinweises auf die Patenterteilung: **10.06.2009**
(21) Anmeldenummer: 04008550.8
(22) Anmeldetag: 08.04.2004
(51) Int. Cl.: G01G 11/08

(54) **Vorrichtung zum kontinuierlichen Dosieren und pneumatischen Fördern von schüttfähigen Gütern**
Device for continuous dosing and for pneumatically conveying of free-flowing products.
Dispositif de dosage en continu et de transport pneumatique de produits coulants

(30) Priorität: 11.04.2003 DE 10317001
(43) Veröffentlichungstag der Anmeldung: 13.10.2004
(73) Patentinhaber: Schenck Process GmbH, 64293 Darmstadt (DE)
(72) Erfinder: Hax, Heinz, 64823 Gross-Umstadt (DE)
(74) Vertreter: Behrens, Helmut

(56) Entgegenhaltungen:
- WO-A-99/13302
- DE-A1- 10 106 798
- HAEFNER H W: "EINSATZ DER DOSIERROTORWAAGE ALS GRAVIMETRISCHES STELLGLIED BEI PROZESSFEUERUNGSANLAGEN" WAGEN UND DOSIEREN, VERLAGSGESELLSCHAFT KEPPLER, MAINZ, DE, Bd. 24, Nr. 3, 1. Mai 1993 (1993-05-01), Seiten 3-9, XP000361338 ISSN: 0342-5916
- HAEFNER H W ET AL: "DOSIERROTORWAAGEN - DIE UNIVERSELLE LOESUNG" WAGEN UND DOSIEREN, VERLAGSGESELLSCHAFT KEPPLER, MAINZ, DE, Bd. 27, Nr. 6, November 1996 (1996-11), Seiten 26-34, XP000640440 ISSN: 0342-5916
- "ACHEMA 97: JUBILAEUMSMESSE MIT AUSSTELLERREKORD" WAGEN UND DOSIEREN, VERLAGSGESELLSCHAFT KEPPLER, MAINZ, DE, Bd. 28, Nr. 4, Juli 1997 (1997-07), Seiten 21-27, XP000695426 ISSN: 0342-5916

## Beschreibung

Die Erfindung betrifft eine Vorrichtung zum kontinuierlichen Dosieren und pneumatischen Fördern von schüttfähigen Gütern gemäß dem Oberbegriff des Patentanspruchs 1 und 14.

In industriellen Herstellungs- und Verarbeitungsverfahren werden vielfach Schüttgüter dosiert zugegeben. Dazu können sie nicht immer dem Herstellungs- oder Verarbeitungsprozeß direkt zugeführt werden, sondern werden häufig über pneumatische Förderleitungen zum Herstellungs- oder Verarbeitungsort transportiert. Die Schüttgüter werden dazu in der Regel aus einem Silo oder anderen Vorratsbehältern abgezogen und über Dosiervorrichtungen in eine pneumatische Förderleitung eingeleitet. In die Förderleitung wird dabei mittels eines Gebläses meist eine kontinuierliche Förderluftmenge eingeblasen, die im wesentlichen von der vorgesehenen maximalen Förderstärke, dem Förderleitungsquerschnitt und der Länge der Förderstrecke abhängig ist.

Insbesondere bei der Herstellung von Zement, Kalk, Gips und anderen Keramikmaterialien wird über eine pneumatische Förderleitung schüttfähiger Brennstoff wie Kohlenstaub dosiert in einen Brennofen mit einer pneumatischen Förderleitung eingeblasen, um eine bestimmte Verarbeitungstemperatur zu erzeugen. Dabei muß die dosierte Brennstoffzugabe sehr gleichmäßig und genau erfolgen, um Temperaturschwankungen und eine unwirtschaftliche Verbrennung sowie erhöhte Verbrennungsrückstände zu vermeiden.

Eine derartige Vorrichtung zur kontinuierlichen Dosierung von Schüttgütern in eine pneumatische Förderleitung ist aus der DE 32 17 406 C2 bekannt. Dazu wird eine gravimetrische Dosierung mit einem Dosierrotor vorgeschlagen, der unter einem Vorratsbehälter bzw. Silo angeordnet ist. Aus dem Silo werden die Schüttgüter mit einer Austragszellenradschleuse abgezogen und in eine Aufgabeöffnung des Dosierrotors eingefüllt. Der Dosierrotor dreht sich dabei um eine vertikale Achse bis die Rotortaschen bzw. -kammern nach ca. 345° über einer Entleerungsöffnung angelangt sind. Die Entleerungsöffnung ist durchgängig mit einer pneumatischen Förderleitung verbunden, an die ein Gebläse angeschlossen ist, so daß die Schüttgüter vertikal aus der Entleerungsöffnung ausgeblasen und insbesondere einem Verbrennungsofen zugeführt werden. Der Rotor ist dabei über einen Hebelarm gelenkig an Wägezellen aufgehängt, so daß er die geförderte Schüttgutmenge gewichtsmäßig erfaßt. Aus der erfaßten Fördermenge einer Rotorumdrehung wird in einer Auswertevorrichtung die Ist-Förderstärke errechnet, die mit einer vorgegebenen Soll-Förderstärke verglichen und bei einer Abweichung die Rotordrehzahl entsprechend geregelt wird, um eine kontinuierliche Förderstärke aufrecht zu erhalten. Eine derartige gravimetrische Dosierung mit einem Dosierrotor ist apparativ sehr aufwendig, da die pneumatische Förderleitung vertikal durch den Rotor geführt werden muß und über kraftnebenschlußfreie flexible Anschlußteile am Rotor zu befestigen ist. Des weiteren ist zwischen dem Silo und dem Dosierrotor zur druckmäßigen Entkopplung noch eine zusätzliche Zellenradschleuse vorgesehen, die den apparativen Aufwand der gravimetrischen Dosierung und pneumatischen Förderung zusätzlich erhöht.

Bei einer derartigen Kohlenstaubdosiervorrichtung muß der Rotor aus Sicherheitsgründen auch vorgegebenen Überdrücken standhalten, so daß wegen dieser mechanischen Festigkeitsvorgaben die verwogenen Teile verhältnismäßig schwer ausgebildet sein müssen. Daraus folgt bei einer gravimetrischen Dosierung ein wägetechnisch ungünstiges Verhältnis des Nutzgewichts zum Taragewicht, wobei die Wägegenauigkeit auch noch durch rotatorisch bedingte Beschleunigungskräfte ungünstig beeinflußt werden kann.

Zur Verbesserung der Meßgenauigkeit derartiger gravimetrischer Dosierverfahren ist aus dem Fachaufsatz von Häfner und Wolfschaffner, Dosierrotorwaagen - die universelle Lösung, in der Fachzeitschrift wägen+dosieren, Heft 6, 1996, Seiten 26 bis 34 ein Blocksystem mit statischer Kontrollwägung bekannt, durch die die kontinuierliche gravimetrische Dosierung in vorgegebenen zeitlichen Abständen nachkalibriert werden kann, oder aus dem Fachaufsatz von Häfner, Einsatz der Dosierrotorwaage als gravimetrisches Stellglied bei Prozeßfeuerungsanlagen, in der Fachzeitschrift Wägen + Dosieren, Heft 3, 1993, seiten 3 bis 9. Dazu ist zwischen dem Silo und der Austragszellenradschleuse des Dosierrotors ein zusätzlicher Kontrollbehälter angeordnet, der von der Zellenradschleuse des Silos kontinuierlich befüllt wird. Dieser Kontrollbehälter stellt einen separaten Vorratsbehälter dar, der an seinem querschnittsgroßen Oberteil eine kleine Zuführöffnung besitzt und sich zum Auslaßbereich konisch verjüngt und meist noch ein zusätzliches Rührwerk enthält. Dieser Kontrollbehälter ist über die Austragszellenradschleuse mit dem Dosierrotor verbunden und das ganze stützt sich auf vier Wägezellen zu einer statischen Kontrollwägung ab. In vorgegebenen Zeitabständen wird der verwogene Kontrollbehälter durch ein Absperrorgan am Silo von der weiteren Befüllung getrennt und zwischen einem oberen und einem unteren Füllstand statisch verwogen. Die statische Gewichtsdifferenz dieser beiden Messungen wird dann mit der in dieser Zeit dynamisch ermittelten Dosiermenge verglichen und bei einer Abweichung eine Nachkalibrierung der dynamischen Dosierung vorgenommen.

Eine derartige statische Kontrollwägung ist systembedingt allerdings auch mit einem Meßfehler behaftet, der durch eine möglichst große Kontrollmenge und einen verhältnismäßig großen Vergleichszeitraum gering gehalten werden kann. Dies erfordert aber einen aufwendig großen Zwischenbehälter, der in der Kontrollmeßzeit durch Leck- und Schöpfluft mit Förderdruck beaufschlagt wird. Um gleichsam eine kontinuierliche Dosierung beim luftdichten Abschluß des Kontrollbehälters vom Silo zu gewährleisten, ist der Kontrollbehälter in seinem oberen Bereich über ein zusätzliches Filter mit der Atmosphäre verbunden. Dies erfordert nicht nur einen zusätzlichen apparativen Aufwand, sondern erzeugt auch noch eine Meßwertverfälschung der statischen Kontrollwägung, die durch den Förderdruck entsteht, die der Gewichtskraft entgegenwirkt und somit im statischen Gewichtssignal enthalten ist. Da dieser Differenzdruck zwischen dem Förderdruck und dem im Kontrollbehälter herrschenden Atmosphärendruck sowohl von der jeweiligen Förderstärke als auch der Förderlufttemperatur abhängig ist, kann dieser Fehler nur schwer vermieden werden.

Aus der EP 0 644 406 B1 ist zwar eine kontinuierliche gravimetrische Dosiervorrichtung bekannt, die diese Druckverhältnisse in einem derartigen verwogenen Vorratsbehälter mit Druckaufnehmern überwacht und erst dann eine Gewichtsmessung durchführt, wenn kein Druckunterschied mehr feststellbar ist. Dies ist aber bei einer kontinuierlichen Dosierung in einem pneumatischen Förderweg mit Überdruck nur durch aufwendige Geräte zur Druckentkopplung wie Staubpumpen und dergleichen möglich, da bei Dosierorganen Leckluft oder Schöpfluftanteile meist nicht auszuschließen sind.

Aus der DE 44 43 053 A1 ist ein weiteres Verfahren und eine Vorrichtung zur kontinuierlichen gravimetrischen Dosierung und Massenstrombestimmung von fließfähigen Gütern bekannt. Zur gravimetrischen Dosierung ist dabei ein Durchflußmeßgerät mit einem Coriolis-Meßrad vorgesehen, das eine schnelle Gewichtsermittlung des durchfließenden Schüttgutstromes ermöglicht und in seiner Ausgestaltung weniger aufwendig ist als ein Dosierrotor. Allerdings erfordert diese Dosiervorrichtung zum Austrag in die pneumatische Förderleitung eine zusätzliche Zellenradschleuse als Dosierorgan, deren Drehzahl von der Durchflußmeßvorrichtung gesteuert wird. Bei einer Brennstoffdosierung in eine Feuerungsanlage soll die zusätzliche Zellenradschleuse jedoch entbehrlich sein und direkt in die Förderleitung dosiert werden können. Dazu muß dann aber das Fördergebläse in seiner Luftmenge regelbar sein. Bei höheren Förderstärken erhöht sich dabei aber der Druck im Gehäuse der Durchflußmeßvorrichtung und an der Abzugszellenradschleuse, so daß an dieser erhöhte Leckluft und Schöpfluft in den Vorratsbehälter eingeleitet wird. Dadurch entsteht wiederum ein ungleichmäßigerer Austrag aus der Zellenradschleuse, wodurch zur Druckentkopplung zur Förderleitung wiederum eine Staubpumpe oder eine zusätzliche Zellenradschleuse notwendig ist. Dadurch erhöht sich der apparative Aufwand wiederum erheblich und fordert zudem noch zusätzlichen Bauraum.

Derartige gravimetrische Dosiereinrichtungen mit Coriolis-Durchflußmessern verfügen auch nicht immer über die notwendige Langzeitgenauigkeit, so daß auch dort häufig eine statische Kontrollmeßvorrichtung vorgesehen wird. Deshalb sind auch bei Coriolis-Durchflußmessern aus Genauigkeitsgründen teilweise verwogene Zwischenbehälter wie bei Dosierrotoren notwendig, die zur Nachkalibrierung eingesetzt werden. Auch derartige statische Kontrollwägeeinrichtungen erhöhen den apparativen Aufwand erheblich und erfordern noch zusätzlichen Bauraum, der insbesondere in der Höhe häufig nicht zur Verfügung steht.

Zur Verbesserung der Dosierkonstanz in pneumatische Förderleitungen ist aus der DE 197 49 873 A1 eine Doppelschleusensystem mit dazwischen angeordnetem, stets gefüllten zusätzlichen Zwischenbehälter bekannt, der eine Entkopplung des Förderleitungsdrucks zum Vorratsbehälter bewirkt. Dazu ist es aber erforderlich, daß die Austragszellenradschleuse stets mit einer höheren Drehzahl läuft als die als Dosierorgan arbeitende zweite Zellenradschleuse, wobei die Austragszellenradschleuse ein Teil des Schüttgutes wieder in den Vorratsbehälter zurückfördert. Würde man eine derartiges Doppelschleusensystem zur Druckentkopplung vor den zur Nachkalibrierung vorgesehenen verwogenen Kontrollbehälter einbauen, so müßte noch ein weiterer Behälter zur Aufnahme der Rückfördermenge vorgesehen werden, so daß in dieser Dosiervorrichtung insgesamt vier Behälter notwendig wären.

Der Erfindung liegt deshalb die Aufgabe zugrunde, eine Vorrichtung zur kontinuierlichen Dosierung von Schüttgütern in eine pneumatische Förderleitung zu schaffen, mit der auf einfache Weise eine genaue Dosierkonstanz erreichbar ist.

Diese Aufgabe wird durch die in Patentanspruch 1 und 14 angegebenen Erfindungen gelöst. Weiterbildungen und vorteilhafte Ausführungsbeispiele der Erfindung sind in den Unteransprüchen angegeben.

Die Erfindung hat den Vorteil, daß bei der statischen Kontrollmeßeinrichtung durch die Berücksichtigung der Einlaufund Auslaufquerschnitte nur ein einfacher kleiner Zwischenbehälter vorgesehen werden braucht, der kostengünstig herstellbar ist und nur eine geringe Bauhöhe erfordert. Durch die Berücksichtigung der unterschiedlichen Druckverhältnisse an den wirksamen druckbelasteten Querschnittsflächen kann auch ein großer Einlaßdurchmesser am Kontrollbehälter gewählt werden, der im kontinuierlichen Dosierbetrieb den Schüttgutstrom direkt aus dem Vorsilo ohne Stockungen und zusätzliche Rührwerksteile abfließen läßt. Dadurch ist eine sonst übliche Zuführschleuse oder dergleichen zwischen dem Auslaß des Vorsilos und dem engen Einlaß des Kontrollbehälters nicht notwendig.

Die Erfindung hat weiterhin den Vorteil, daß durch die Berücksichtigung der Druckverhältnisse zwischen der Förderleitung und dem Vorsilo kein Druckausgleich zur Atmosphäre notwendig ist, die bei Schüttgütern wie Kohlenstaub noch einen aufwendigen Filter erfordert. Da durch den stets gefüllten Kontrollbehälter eine Abdichtwirkung zum Vorsilo erreicht wird, entsteht nur eine geringe Leck- und Schöpfluftströmung an der dosierenden Zellenradschleuse, wodurch vorteilhafterweise auch bei höheren Förderdrücken ein kontinuierlicher Auslauf in die Förderleitung gewährleistet ist.

Die Erfindung hat weiterhin den Vorteil, daß durch eine'derartige Kontrollmeßeinrichtung mit einfachem Kontrollbehälter eine regelmäßige Nachkalibrierung des Dosierorgans möglich ist. Dadurch ist die Austragszellenradschleuse gleichzeitig als Dosierorgan verwendbar, so daß auf zusätzliche gravimetrische Dosierorgane verzichtet werden kann, ohne daß die Dosiergenauigkeit nennenswert leidet.

Bei einer besonderen Ausbildung der Erfindung ist zur verbesserten Druckentkopplung zum Vorsilo die Anordnung von zwei Zellenradschleusen vorgesehen, wodurch der Vorteil entsteht, daß diese Dosiervorrichtung mit besonders hohen Förderdrücken bei guter Dosierkonstanz arbeitet. Dies hat insbesondere den Vorteil, daß bei einer Kohlenstaubdosierung auf eine zusätzliche Staubpumpe vor der Förderleitung oder einen stets gefüllten zusätzlichen Zwischenbehälter zwischen den Zellenradschleusen verzichtet werden kann.

Eine weitere besondere Ausbildung der Erfindung, bei der die dynamische Dosierstärkenerfassung mit einem einfachen Druckaufnehmer oder einer Ultraschallerfassung in der Förderleitung vorgesehen ist, hat den Vorteil, daß der Herstellungsaufwand besonders gering ist und mit minimalem Bauraum ausgekommen werden kann. Dabei wird durch die Kontrollmeßeinrichtung gleichzeitig der Vorteil erreicht, daß damit die druckabhängige Dosierregelung so verbessert werden kann, daß damit auf einfache Weise eine verhältnismäßig genaue Dosierkonstanz erreichbar ist.

Die Dosiervorrichtung mit der Kontrollmeßeinrichtung und dem einfachen Kontrollbehälter hat zusätzlich den Vorteil, daß dadurch die Meßgenauigkeit auch bei Dosiervorrichtungen mit einer verwogenen Dosierzellenradschleuse oder einer Coriolis-Durchflußmeßeinrichtung oder anderen gravimetrischen Dosierorganen vorteilhaft verbessert werden kann. Dabei entsteht insbesondere bei der Kohlenstaubdosierung der Vorteil, daß durch die einfachen Kontrollbehälter sich der Aufwand zu gravimetrischen Dosiervorrichtungen ohne statische Kontrolleinrichtungen nicht nennenswert erhöht, obwohl dadurch die Dosiergenauigkeit insgesamt erheblich verbessert werden kann.

Die Erfindung wird anhand eines Ausführungsbeispiels, das in der Zeichnung dargestellt ist, näher erläutert. Es zeigen:
- Fig. 1:: eine förderdruckgeregelte Kohlenstaubdosiervorrichtung mit Kontrollbehälter und einer Dosierzellenradschleuse;
- Fig. 2:: eine schematische Darstellung der förderdruckgeregelten Kohlenstaubdosiervorrichtung mit einem Blockschaltbild der Kontrollmeßeinrichtung;
- Fig. 3:: eine gravimetrisch geregelte Kohlenstaubdosiervorrichtung mit einer Austrags- und einer verwogenen Dosierzellenradschleuse, und
- Fig. 4:: eine schematische Darstellung der gravimetrisch geregelten Kohlenstaubdosiervorrichtung mit einem Blockschaltbild der Kontrollmeßeinrichtung.

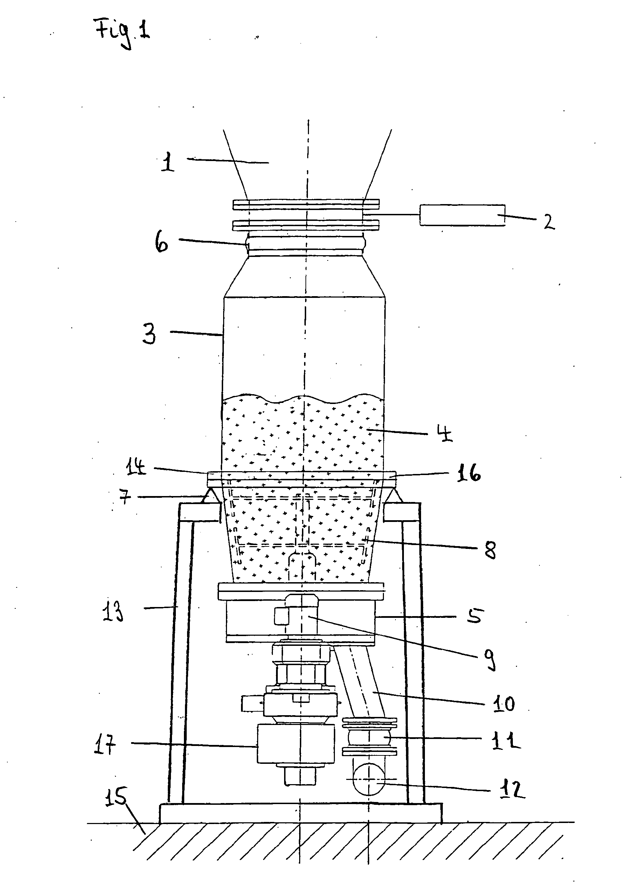

In Fig. 1 der Zeichnung ist eine Vorrichtung zum Dosieren von Kohlenstaub in eine pneumatischen Förderleitung 12 dargestellt, die im wesentlichen aus einem verwogenen Kontrollbehälter 3 und einer druckgeregelten Austragszellenradschleuse 5 besteht, die durch einen Druckaufnehmer P3 in der Förderleitung 12 geregelt wird und deren Förderstärke durch eine Kontrollmeßeinrichtung in vorgegebenen zeitlichen Abständen nachkalibrierbar ist.

Als zu dosierendes Schüttgut 4 ist Kohlenstaub vorgesehen, der zur Verbrennung über eine pneumatische Förderleitung 12 in einen nicht dargestellten Drehrohrofen eingeblasen wird. Um eine konstante möglichst rückstandsfreie Verbrennung zu gewährleisten, muß eine vorgegebene Kohlenstaubmenge mit möglichst konstanter Förderstärke in die Förderleitung 12 dosiert eingebracht werden. Dazu ist in einem Vorsilo 1 eine vorgegebene Vorratsmenge von Kohlenstaub gespeichert, die kontinuierlich oder in gewissen Zeitabständen aufgefüllt wird. Das Vorsilo 1 ist oberhalb der übrigen Dosiervorrichtung ortsfest angeordnet und stützt sich nicht auf die übrige Dosiervorrichtung ab. Das Vorsilo 1 ist vorzugsweise mit einem konischen Auslauf versehen, das über eine runde Ausgabeöffnung verfügt, an der ein Absperrmittel in Form eines elektrisch gesteuerten Absperrschiebers 2 befestigt ist. Mit diesem Absperrschieber 2 ist das Vorsilo 1 luftdicht gegenüber dem darunterliegenden Kontrollbehälter 3 verschließbar, um den kontinuierlichen Schüttgutstrom aus dem Vorsilo 1 zu unterbrechen. Zwischen dem Vorsilo 1 und dem Kontrollbehälter 3 ist eine bewegliche Gummimanschette 6 als kraftnebenschlußfreie Verbindung angeordnet.

Bei einer Kohlenstaubdosiervorrichtung für eine Förderstärke von beispielsweise 20 t/h ist vorzugsweise ein zylindrisch ausgebildeter Kontrollbehälter 3 vorgesehen, der eine vertikale Höhe von ca. 2 m aufweist. Der Kontrollbehälter 3 hat eine Einlaßöffnung von ca. 700 mm Innendurchmesser bei einem Außendurchmesser des Kontrollbehälters von ca. 1.000 mm. Im unteren Drittel des Kontrollbehälters 3 ist zusätzlich ein Rührwerk angeordnet, das den Kohlenstaub 4 gleichmäßig in ein darunter vorgesehenes Austragsorgan befördert, das als Austragszellenradschleuse 5 ausgebildet ist.

Der Kontrollbehälter 3 stützt sich an einem Verbindungsrand 14 auf vorzugsweise drei Wägezellen 7 ab, die kraftaufnahmeseitig auf einem ortsfesten Stützrahmen 13 aufliegen. Die Wägezellen 7 könnten auch unterhalb der gesamten Dosiervorrichtung zwischen dem Stützrahmen 13 und der Aufstellfläche 15 angeordnet sein, wenn dies aus konstruktiven Gründen vorteilhaft ist. Während des kontinuierlichen Dosierbetriebs und außerhalb der Kontrollmeßphase ist der Absperrschieber 2 ganz oder mindestens teilweise geöffnet, so daß der Kontrollbehälter 3 stets bis in den Vorsilobereich gefüllt ist und durch seinen dichten Inhalt in den Kontrollbehälter 3 eintretende Schöpf- und Leckluft weitgehend gegenüber dem Vorsilo 1 abdichtet. An seinem Auslaufende ist der Kontrollbehälter 3 mit einer Abdeckplatte verschlossen, die zu der darunter angeordneten Austragszellenradschleuse 5 mindestens eine Auslauföffnung aufweist. Diese Auslauföffnung deckt sich mit einer Einlaßöffnung der darunter angeordneten Austragszellenradschleuse 5. Der Kontrollbehälter 3 kann unten aber auch durch die Deckplatte der Austragszellenradschleuse 5 verschlossen werden, die mit dem unteren Rand 16 des Kontrollbehälters 3 verschraubt ist. Die Austragszellenradschleuse 5 ist als horizontale Zellenradschleuse ausgebildet, die den auszutragenden Kohlenstaub 4 von einer Einlaßöffnung mittels eines angetriebenen Flügelrads über einen Winkelbereich von ca. 180° zu einem Auslaßbereich befördert, durch die der Kohlenstaub 4 nach unten in die pneumatische Förderleitung 12 ausfällt.

Von der Austragsöffnung der Zellenradschleuse 5 ist ein Austragsrohr 10 vorgesehen, das über einer beweglichen Rohrmanschette 11 kraftnebenschlußfrei mit der pneumatischen Förderleitung 12 verbunden ist. An der Förderleitung 12 ist ein nicht dargestelltes Gebläse angeschlossen, das eine kontinuierliche Luftmenge in die Förderleitung 12 einbläst, durch die der eindosierte Kohlenstaub in den Ofen eingeblasen wird. Als Teil der Kontrollmeßeinrichtung ist der Kontrollbehälter 3 mit der daran befestigen Austragsschleuse 5 und dem Rührwerk 8 verwogen auf den Wägezellen 7 abgestützt.

Die Dosierung mit einer Austragszellenradschleuse 5 kann volumetrisch erfolgen, indem die Zellenradschleuse mit einer vorgegebenen Drehzahl den eingeführten Kohlenstaub 4 von der Auslaßöffnung des Kontrollbehälters 3 in das Austragsrohr 10 befördert. Soweit dies wie vorstehend vorgesehen mit nur einer Zellenradschleuse 5 durchgeführt wird, arbeitet diese gleichzeitig auch als Dosierorgan. Dabei verhält sich die ausgetragene Förderstärke weitgehend linear zur Zellenraddrehzahl, so daß eine vorbestimmte Förderstärke von beispielsweise 20 t/h einer vorbestimmbaren Zellenraddrehzahl entspricht. Diese kann durch eine Steuerung des Antriebsmotors 9 der Zellenradschleuse 5 eingestellt und damit vorgegeben werden. Durch die Kontrollmeßeinrichtung mit dem verwogenen Kontrollbehälter 3 und einer Regelung des Antriebsmotors 9 der Austragszellenradschleuse bzw. Dosierzellenradschleuse 5 kann die volumetrische Dosiergenauigkeit verbessert werden.

Eine derartige volumetrische Kohlenstaubdosierung ist für die meisten Anwendungen allerdings nicht genau genug, da damit kurzzeitige Dosierschwankungen nicht ausgeregelt werden können. Deshalb ist bei der erfindungsgemäßen Kohlenstaubdosiervorrichtung eine druckgeregelte Dosierung mit einer Nachkalibrierung mittels der Kontrollmeßeinrichtung vorgesehen. Dazu ist in der Förderleitung 12 zwischen dem Gebläse und der Kohlenstaubeinleitungsstelle ein nicht dargestellter Druckaufnehmer P3 eingebaut, der den Druck in der Förderleitung 12 erfaßt. Eine druckgeregelte Dosierung kann durch eine Differenzdruckmessung in einem homogenen Förderleitungsteil noch verbessert werden, in dem möglichst wenig Förderluftturbulenzen auftreten.

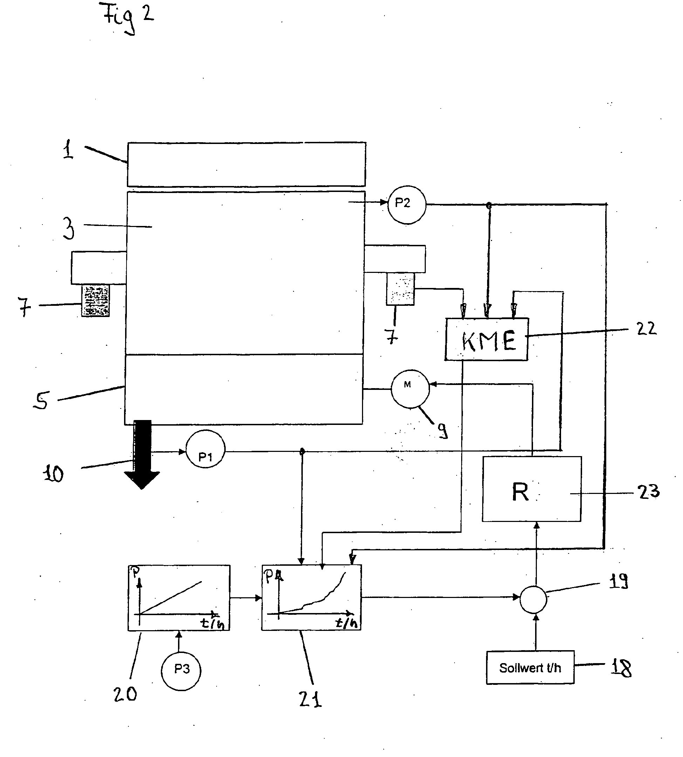

Das mit der Vorrichtung nach Fig. 1 durchgeführte Dosierverfahren zur kontinuierlichen Kohlenstaubeinblasung in einen Ofen ist in Fig. 2 der Zeichnung schematisch dargestellt und wird anhand des Blockschaltbildes näher beschrieben. Die Kohlenstaubdosiervorrichtung besteht dabei im wesentlichen aus einer druckabhängig geregelten Austragszellenradschleuse 5 und einer Kontrollmeßeinrichtung. Während des geregelten Dosierbetriebs, ohne daß dabei eine Kontrollmessung erfolgt, ist der Absperrschieber 2 am Vorsilo 1 geöffnet und der Kontrollbehälter 3 bis oben hin mit Kohlenstaub 4 befüllt. Über das rotierende Rührwerk 8, das über eine Antriebswelle mit einem eigenen Antrieb 17 verbunden ist, wird der Kohlenstaub 4 über die Auslaßöffnung des Kontrollbehälters 3 in eine Kammer der Horizontalzellenradschleuse 5 geleitet. Durch das ebenfalls rotierende Zellenrad werden nacheinander alle Kammern gefüllt und zu einer etwa 180° gegenüberliegenden Austragsöffnung gefördert, so daß bei einer bestimmten Umlaufgeschwindigkeit im Grunde immer eine bestimmte Kohlenstaubmenge pro Zeiteinheit in die Förderleitung 12 ausgetragen wird.

Da die Körnung, die Konsistenz, die Zusammensetzung und auch der Feuchtigkeitsgehalt kurzzeitig schwanken können, ist eine Regelung der Antriebsdrehzahl der Zellenradschleuse 5 zur Verbesserung der Dosiergenauigkeit vorgesehen. Dazu ist der Antriebsmotor 9 der Austragszellenradschleuse 5 mit einem Regler 23 verbunden, dem ein Sollwert einer bestimmten Förderstärke in t/h mittels eines Sollwertgebers 18 vorgebbar ist. Der Regelkreis 19 ist andererseits noch mit dem Druckaufnehmer P3 in der Förderleitung 12 verbunden, der einen Druckwert bzw. Differenzdruckwert erfaßt, der im Idealfall linear von der in der Förderleitung 12 eingebrachten Kohlenstaubmenge abhängt. Dieser Druckaufnehmer P3 ist mit einer Aufnehmerschaltung 20 als elektronische Rechenschaltung verbunden, in der die lineare Abhängigkeit zwischen dem Förderdruck und der Förderstärke eingegeben ist und die aus dem jeweils erfaßten Förderdruck bzw. Differenzförderdruck einen Förderstärken-Istwert (t/h) ermittelt.

Der ideale Zusammenhang zwischen dem Druck in der Förderleitung 12 und der ausgetragenen Förderstärkenmenge wird in der Praxis noch von Faktoren wie beispielsweise der Förderlufttemperatur, der Druckunterschiede in der Zellenradschleuse 5 und im Kontrollbehälter 3 und mit den damit zusammenhängende Strömungsverhältnissen beeinflußt, so daß noch eine Kompensationsschaltung 21 als elektronische Rechenschaltung vorgesehen ist. Durch diese Kompensationsschaltung 21 erfolgt mindestens eine elektronische Druckkompensation, die insbesondere die Druckunterschiede an der Austrags- bzw. Dosierzellenradschleuse 5 berücksichtigt. Dazu ist am Auslauf der Schleuse 5 ein weiterer Druckaufnehmer P1 und im Kontrollbehälter 3 ein zusätzlicher Druckaufnehmer P2 vorgesehen, die mit der Kompensationsschaltung 21 verbunden sind. Dieser ist ein Rechenalgorithmus vorgegeben, der dem Einfluß der Druckverhältnisse auf die Ist-Förderstärke entspricht. Die Kennwerte dazu werden der Kompensationsschaltung 21 vorgegeben oder aufgrund eines Testbetriebs ermittelt.

Aus der idealen förderleitungsabhängigen Ist-Förderstärke und den jeweils erfaßten Druckwerten durch die Druckaufnehmer P1 und P2 wird in der Kompensationsschaltung 21 eine kompensierte Ist-Förderstärke errechnet, die den Einfluß der Druckverhältnisse an der Austragsschleuse 5 berücksichtigt und damit der tatsächlichen Förderstärke in der pneumatischen Förderleitung 12 weitgehend entspricht. Diese wird mit der vorgegebenen Soll-Förderstärke verglichen und bei einer Abweichung durch den Regler 23 durch eine Drehzahländerung der Dosierzellenradschleuse 5 ausgeregelt.

Eine derartige Förderstärkenregelung kann auch mit einer Mikrowellen- oder Ultraschallerfassung in der Förderleitung 12 erfolgen. Dazu wird über eine Mikrowellen- oder Ultraschallaufnehmervorrichtung die Verteilungsdichte von Luft und Kohlenstaub auf einem Querschnittsabschnitt im Förderrohr 12 erfaßt und daraus in einer Aufnehmerschaltung die Ist-Förderstärke errechnet. Diese kann dann wiederum als Führungsgröße für den Regler 23 verwandt werden.

Zur Verbesserung der Dosiergenauigkeit schlägt die Erfindung noch ein gravimetrisches Kontrollmeßverfahren vor, das zur Nachkalibrierung der druckabhängigen oder verteilungsabhängigen Förderstärkenregelung dient. Dazu ist eine Kontrollmeßeinrichtung vorgesehen, die mindestens aus dem verwogenen Kontrollbehälter 3 mit großer Einlaßöffnung und etwa gleich großem Durchflußquerschnitt mit anschließendem Dosierorgan und einer elektronischen Rechenschaltung als Kontrollmeßschaltung 22 zum elektronischen Druckausgleich besteht. Dazu ist als Dosierorgan meist eine horizontale Zellenradschleuse 5 vorgesehen, die mit verwogen wird und über einen kleineren Auslaßquerschnitt die Schüttgüter 4 in die Förderleitung 12 austrägt. Dabei besteht das Problem darin, daß durch den Überdruck in der Förderleitung 12 bei einer statischen Kontrollmessung zusätzliche Kräfte auf die Wägezellen 7 einwirken, die dieses Wägeergebnis verfälschen können. Deshalb schlägt die Erfindung vor, diese druckabhängigen Krafteinwirkungen auf die Wägezellen 7 während der Kontrollmessung rechnerisch oder mechanisch zu kompensieren. Dazu sind ebenfalls die beiden Druckaufnehmer P1 und P2 vorgesehen, die zum einen die Druckbelastung an der Austrittsquerschnittsstelle durch den Aufnehmer P1 und andererseits die Druckbelastung an der Eintrittsquerschnittsstelle durch den Druckaufnehmer P2 vor dem Absperrschieber 2 erfassen. Wird nun zu einer Kontrollmessung der Absperrschieber 2 geschlossen, während noch Kohlenstaub ausgetragen wird, herrscht an der Austragsquerschnittsstelle ein Überdruck, der etwa dem Förderdruck entspricht. Über die Austrittsquerschnittsstelle entsteht dadurch eine Krafteinwirkung auf die Wägezellen 7, die entgegen der Gewichtskraft wirkt. Bei der Kontrollmessung während eines oberen Füllstandspunktes entsteht in dem oberen entleerten Behälterbereich ein Unterdruck, der durch den Druckaufnehmer P2 erfaßt und der ebenfalls zu einer Kraftwirkung auf die Wägezellen 7 entgegen der Gewichtskraft wirkt.

Das zum Zeitpunkt des oberen Füllstandspunkts ermittelte Wägeergebnis wird deshalb um die druckabhängige Krafteinwirkung im oberen Behälterteil und im unteren Behälterteil bzw. an der mitverwogenen Dosierzellenradschleuse 5 rechnerisch ausgeglichen. Dazu ist eine elektronische Rechenschaltung in Form einer Kontrollmeßschaltung 22 als Ausgleichsmittel vorgesehen, die sowohl mit den Wägezellen 7 als auch mit den Druckaufnehmern P1 und P2 verbunden ist. Dabei ergeben sich zum Druckausgleich Korrekturwerte, die in der Kontrollmeßschaltung 22 aufgrund des ermittelten Druckes und der druckbeaufschlagten wirksamen Querschnittsflächen errechnet werden. Mit Hilfe des Druckaufnehmers P2 und der wirksamen Querschnittsfläche am Absperrschieber 2 sowie dem Druck am Druckaufnehmer P1 und dem wirksamen Querschnitt des Austragsrohres 10 wird dabei die Kraftwirkung auf die Wägezellen 7 errechnet, die zum Zeitpunkt der ersten Kontrollwägung wirken. Um diese Werte wird die Gewichtskraft bei der ersten Kontrollwägung korrigiert, so daß dadurch ein sehr genaues Kontrollbehältergewicht im gefüllten Zustand ermittelbar ist, das nicht durch die unterschiedlichen Druckverhältnisse und die unterschiedlichen wirksamen Belastungsquerschnitte verfälscht wird.

Zur weiteren Kontrollmessung wird nun bei geschlossenem Absperrschieber 2 nach einer bestimmten Förderzeit mindestens noch eine weitere Kontrollmessung an einem unteren Füllstand des Kontrollbehälters 3 durchgeführt. Während dieses Auslaufzeitraums hat sich der Behälter 3 von Kohlenstaub entleert und ist mit Schöpf- und Leckluft über die Zellenradschleuse 5 befüllt. Diese jetzt im Kontrollbehälter 3 befindliche Luft erzeugt bei der unteren Füllstandsmessung einen Überdruck am Aufnehmer P2, der in etwa dem Förderdruck entspricht. Dies ist allerdings nur dann gegeben, wenn der ausgetragene Kohlenstaub durch gleiche Mengenanteile Schöpf- und Leckluft in den Kontrollbehälter 3 gelangt ist. Das Gewichtsergebnis am unteren Füllstandspunkt wird deshalb in der Kontrollmeßschaltung 22 um die ermittelte Krafteinwirkung auf die Wägezellen 7 rechnerisch korrigiert.

Aus den beiden korrigierten Gewichtswerten errechnet die Kontrollmeßschaltung 22 einen Differenzgewichtswert, der der Austragsmenge während des Zeitraums zwischen den beiden Kontrollmeßzeitpunkten entspricht. Die aus der Kontrollmeßzeit errechnete tatsächliche Ist-Förderstärke wird nun mit der eingeregelten kontinuierlichen Ist-Förderstärke in der Kompensationsschaltung 21 verglichen und um die Abweichung nachkalibriert. Dazu wird die Differenz der statischen Förderstärkenermittlung zu dem dynamischen Ist-Förderstärkenwert errechnet und daraus ein Korrekturwert oder Korrekturfaktor gebildet, um den die dynamische Ist-Förderstärke fortlaufend korrigiert wird. Dieser korrigierte Ist-Förderstärkenwert wird als Führungsgröße für den Regelkreis 19 verwendet und über den vorgegebenen Sollwert ausgeregelt. Eine derartige Kontrollmessung erfolgt vorzugsweise in einem Meßzeitraum von etwa einer Minute sowie einer statischen Kontrollmenge von ca. 300 kg und kann in vorgegebenen Zeitabständen oder aufgrund anderer Kriterien beliebig wiederholt werden. Eine derartige Kontrollmeßeinrichtung kann nicht nur bei Zellenradschleusen 5 als Dosierorgan eingesetzt werden, sondern auch beispielsweise bei Förderschnecken oder anderen druckbelastbaren Förderorganen.

Bei einer bevorzugten Ausführung der Kontrollmeßvorrichtung ist vorgesehen, während der Kontrollmeßzeit den Kontrollbehälter 3 mit Förderdruck zu beaufschlagen. Dazu sind noch zusätzliche ventilgesteuerte Druckluftleitungen als Druckausgleichsvorrichtung notwendig, die dem Kontrollbehälter 3 nach dem Schließen des Absperrschiebers 2 mindestens soviel Förderluft zuleiten, wie Kohlenstaub gleichzeitig ausgetragen wird. Dadurch herrscht während der Kontrollmeßzeit in der Dosiervorrichtung vom Kontrollbehälter 3 bis zur Förderleitung 12 kein Druckunterschied, so daß lediglich über den Einlaßquerschnitt des Kontrollbehälters 3 eine Korrektur der statischen Wägeergebnisse vorgenommen werden muß. Da dieser Förderdruck und die druckbeaufschlagte wirksame Querschnittsfläche bekannt ist, kann dies über einen vorgebbaren Faktor in der Kontrollmeßschaltung 22 als Ausgleichsmittel berücksichtigt werden. Dies hat zusätzlich den Vorteil, daß durch den leerlaufenden Kontrollbehälter 3 während der Kontrollmeßzeit nicht mehr Schöpfund Leckluft in den Kontrollbehälter einströmt als während des übrigen Dosierbetriebs, so daß die Dosierkonstanz gleichbleibend ist.

Eine derartige Dosiervorrichtung mit einer Dosierzellenradschleuse 5 ist durch den stets gefüllten Kontrollbehälter 3 auch ohne zusätzliche Druckentkopplung zur Förderleitung mit einem relativ hohen Förderdruck bis etwa 0,6 bar betreibbar. Dies ist hauptsächlich dadurch möglich, daß der stets gefüllte Kontrollbehälter 3 eine hohe Abdichtwirkung gegenüber dem Atmosphärendruck im Vorsilo 1 aufweist, so daß die Dosierkonstanz auch bei verhältnismäßig hohen Förderdrücken gewährleistet bleibt, da wenig Leckluft den Dosieraustrag beeinträchtigt.

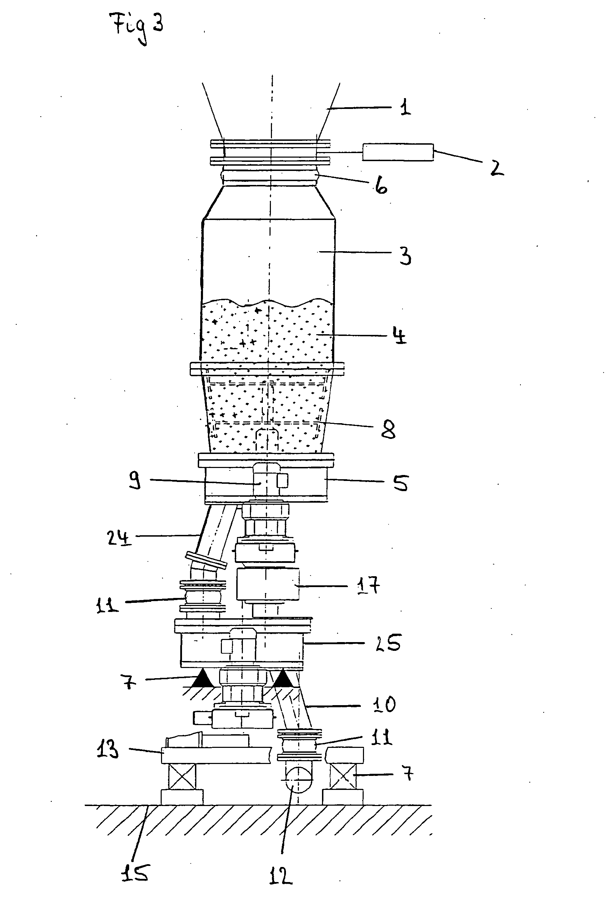

In Fig. 3 der Zeichnung ist ein verbessertes Ausführungsbeispiel einer Kohlenstaubdosiervorrichtung mit zwei Zellenradschleusen 5, 25 dargestellt, das vorzugsweise bei Förderleitungsdrücken größer 0,6 bar eingesetzt wird.

Die Dosiervorrichtung besteht im wesentlichen aus dem Vorsilo 1 mit Absperrschieber 2, an dem über eine bewegliche Gummimanschette 6 der Kontrollbehälter 3 mit der horizontalen Austragszellenradschleuse 5 wie schon nach Fig. 1 der Zeichnung vorgesehen ist. Dabei werden für die gleichen Funktionselemente die selben Bezugszeichen wie in Fig. 1 verwandt. Allerdings ist das Füllrohr 24 zwischen der oberen Austragszellenradschleuse 5 und der unteren Dosierzellenradschleuse 25 ebenfalls kraftnebenschlußfrei über eine bewegliche Rohrmanschette 11 mit der Dosierzellenradschleuse 25 verbunden. Diese als Dosierorgan fungierende Dosierzellenradschleuse 25 ist auf mindestens zwei Wägezellen 7 gelagert und über ein kraftnebenschlußfreies Austragsrohr 10 an die pneumatische Förderleitung 12 angeschlossen. Dabei dient die Dosierzellenradschleuse 25 als gravimetrisches Dosierorgan, das im sogenannten Blockbetrieb mit der Austragszellenradschleuse 5 betrieben wird. Hierzu wird die Antriebsdrehzahl der Austragszellenradschleuse 5 so geregelt, daß die Beladung der verwogenen Dosierzellenradschleuse 25 konstant bleibt, wobei die Austragszellenradschleuse 5 nicht im Überlaufbetrieb fördert. Dies wird im Grunde dadurch erreicht, daß das Füllrohr 24 bis zu einem vorgegebenen Füllstand in etwa konstant befüllt bleibt. Die gesamte Dosiervorrichtung mit dem Kontrollbehälter 3, der Austragszellenradschleuse 5, der Dosierzellenradschleuse 25 und den Verbindungsrohren 10, 24 ist bis auf die Förderleitungsteile 12 an einen gemeinsamen Rahmen 13 befestigt, der insgesamt auf vorzugsweise vier Wägezellen 7 gelagert ist, die im wesentlichen die statische Behälterverwiegung für die Kontrollmessung vornehmen.

Durch die Dosierzellenradschleuse 25 wird eine druckmäßige Entkopplung des Vorsilos 1 von der Förderdruckleitung 12 erreicht, so daß diese Dosiervorrichtung bis zu einem Förderdruck von ca. 1,2 bar mit der notwendigen Dosierkonstanz betrieben werden kann, so daß damit auch höhere Förderstärken bei gleicher Gebläseleistung und gleichem Förderleitungsquerschnitt oder längeren Förderleitungen möglich sind.

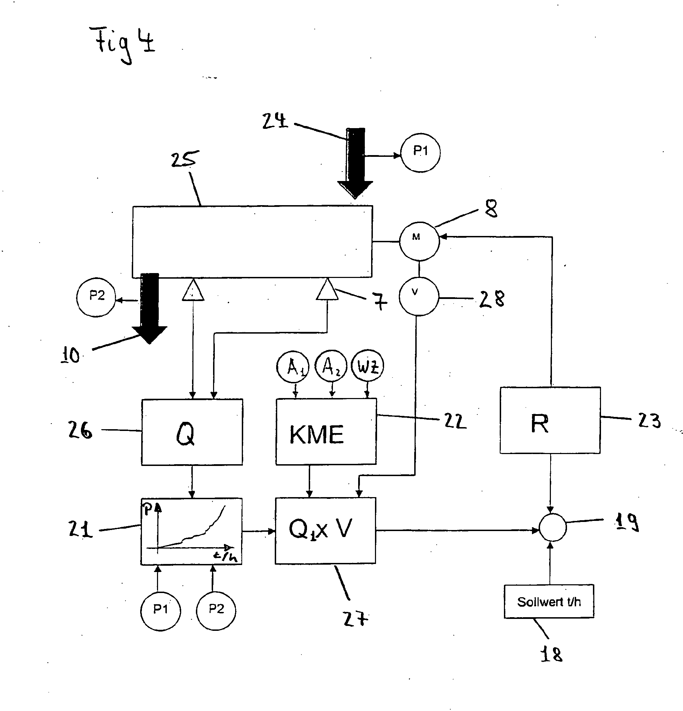

Das mit der Dosiervorrichtung nach Fig. 3 durchgeführte Verfahren und die Nachkalibrierung mittels der Kontrollmeßeinrichtung ist aus der schematischen Darstellung und dem Blockschaltbild in Fig. 4 der Zeichnung ersichtlich. Im normalen kontinuierlichen Dosierbetrieb ohne Kontrollmessung fördert dabei die Austragszellenradschleuse 5 stets soviel Kohlenstaub 4 in das Füllrohr 24, daß die Einfüllkammern der Dosierzellenradschleuse 25 stets vollständig gefüllt werden können. Dies wird im Blockbetrieb im wesentlichen dadurch erreicht, daß es sich um die gleichen horizontalen Zellenradschleusen handelt, die im wesentlichen mit der gleichen Zellenraddrehzahl arbeiten.

Durch die Wägezellen 7 unter der Dosierzellenradschleuse 25 wird deren Gewicht mit den befüllten Kammern erfaßt und in einer elektronischen Rechenschaltung, die als Meßschaltung 26 ausgebildet ist, unter Berücksichtigung des Taragewichts deren Füllmenge Q gewichtsmäßig ermittelt. Der Gewichtswert der Füllmenge Q wird der Kompensationsschaltung 21 übermittelt, in der die Druckverhältnisse an der Dosierzellenradschleuse 25 berücksichtigt werden. Denn durch die hohe Druckbelastung an der Dosierschleuse 25 kann es vorkommen, daß nicht die gesamte Füllmenge bei gleicher Umdrehung vollständig in die Förderleitung 12 abgegeben wird, so daß dadurch ein Meßfehler in der gravimetrischen Dosierung auftritt. Dies wird bei einer hohen Druckbelastung in der Kompensationsschaltung 21 elektronisch bzw. rechnerisch kompensiert. Dazu wird durch die Druckaufnehmer P1 und P2 der Druck am Eingang (Füllrohr) und Ausgang (Austragsrohr) der Dosierzellenradschleuse 25 erfaßt und der Kompensationsschaltung 21 zugeführt. Bei einem hohen Differenzdruck zwischen den Druckaufnehmern P1 und P2 wird dies entsprechend berücksichtigt. Dazu ist in der Kompensationsschaltung 21 eine aufgenommene Kennlinie eingegeben oder eine entsprechende digitale Wertetabelle gespeichert, die diesen Fehler in der Austragsförderstärke in Abhängigkeit eines zunehmenden Differenzdrucks angibt. Durch einen Korrekturwert in Abhängigkeit des Differenzdrucks wird dies in der Kompensationsschaltung 21 berücksichtigt und daraus eine korrigierte Füllmenge Q1 errechnet.

In einer nachfolgenden elektronischen Rechenschaltung, die als Istwertschaltung 27 ausgebildet ist, wird daraus unter Berücksichtigung der von einem Tachogenerator 28 gelieferten Drehzahl oder Umfangsgeschwindigkeit V ein korrigierter Ist-Förderstärkenwert gebildet. Diese Ist-Förderstärke wird einem Regelkreis 19 zugeführt, die diesen mit einem vorgegebenen Sollwert eines Sollwertgebers 18 vergleicht und daraus eine Regelgröße errechnet, mit der der Regler 23 die Antriebsdrehzahl der Dosierzellenradschleuse 25 entsprechend der vorgegebenen Sollförderstärke ausregelt.

Da auch diese gravimetrische kontinuierliche Förderstärkenmessung und -regelung durch dynamische Störungen mit Meßfehlern behaftet sein kann, ist auch bei dieser Dosiervorrichtung mit zwei Zellenradschleusen 5, 25 eine Kontrollmeßschaltung 22 vorgesehen. Durch diese wird in vorgegebenen Zeitabständen eine statische Kontrollwägung durchgeführt, um eine Nachkalibrierung der gravimetrischen Förderstärkenermittlung vorzunehmen. Dazu werden wieder mindestens zwei statische Gewichtswerte zwischen zwei verschiedenen Füllständen durch die Wägezellen 7 unter der Dosiervorrichtung erfaßt. Zunächst wird dazu der Kontrollbehälter 3 durch den Absperrschieber 2 luftdicht verschlossen und der Behälter mit dem Förderleitungsdruck am Druckaufnehmer P2 beaufschlagt. Da nun zwischen den verwogenen Teilen kein Differenzdruck besteht, wirken auf die Wägezellen 7 unter der Dosiervorrichtung während der statischen Kontrollmessung nur zusätzliche druckabhängige statische Kräfte, die aus der Differenz der wirksamen Querschnittsflächen A1 am Absperrschieber 2 und dem Querschnitt A2 des Austragsrohres 10 resultieren und die das statische Gewichtsergebnis beeinflussen. Deshalb werden in der Kontrollmeßschaltung 22 die wirksamen druckbeaufschlagten Querschnittsflächen A1 und A2 und die Wägezellensignale WZ der Kontrollwägungen eingegeben.

Aus der Kontrollwägung für den oberen Füllstand errechnet die Kontrollmeßschaltung 22 einen statischen Gewichtswert, der um die Krafteinwirkung durch den Förderdruck korrigiert ist. Eine derartige Gewichtsermittlung erfolgt ebenfalls für den unteren Füllstandswert. Aus den beiden korrigierten statischen Gewichtswerten und dem Entleerungszeitraum zwischen der Gewichtswerterfassung errechnet die Kontrollmeßschaltung 22 einen Förderstärkenwert. Dieser statische Förderstärkenkontrollwert wird der Istwertschaltung zugeführt und dort mit dem kontinuierlichen Förderstärkenistwert verglichen und bei einer Abweichung ein weiterer Korrekturfaktor oder -wert ermittelt, um den die zukünftigen kontinuierlichen Istwertergebnisse zusätzlich korrigiert und wie vorstehend beschrieben ausgeregelt werden.

Eine derartige Kontrollmessung bedarf etwa einer Kontrollzeit von einer Minute, in der ca. eine Kontrollmenge von 300 kg Kohlenstaub aus dem Kontrollbehälter 3 ausgetragen werden. Eine derartige Kontrollmessung kann in beliebigen Zeitabständen oder aufgrund anderer Anlässe zur Verbesserung der Dosiergenauigkeit wiederholt werden. Da durch die Wiederauffüllung des Kontrollbehälters 3 die gravimetrische Dosierung mit der Dosierzellenradschleuse 25 nicht beeinflußt werden kann, wird die kontinuierliche gravimetrische Dosierung durch die statischen Kontrollwägungen nicht beeinträchtigt.

Das Kontrollmeßverfahren kann auch bei einer förderdruckgesteuerten Dosierregelung der Dosierzellenradschleuse 25 eingesetzt werden. Desweiteren ist die Kontrollmeßeinrichtung auch einsetzbar, wenn statt der Dosierzellenradschleuse 25 ein Coriolis-Durchflußmesser, eine Schneckendosiervorrichtung oder andere gravimetrische Durchflußmeßvorrichtungen vorgesehen sind. Bei hohen Genauigkeitsanforderungen und hohen Förderdrücken können auch zwei Zellenradschleusen 5, 25 zur Druckentkopplung mit einer gravimetrischen zusätzlichen Durchflußmeßeinrichtung kombiniert werden.

Ist hingegen eine Kontrollmeßeinrichtung aus Genauigkeitsgründen-nicht unbedingt notwendig, so kann eine Förderdruckentkopplung auch durch Verwendung von zwei Zellenradschleusen 5, 25 vorgesehen werden, wobei die Dosiergenauigkeit durch eine förderdruckgeregelte Dosierzellenradschleuse 25 verbesserbar ist. Dabei kann die Dosierkonstanz zusätzlich noch durch eine elektronische Druckkompensation an der Dosierzellenradschleuse erhöht werden. Die einzelnen Schaltungsteile der Aufnehmer - 20, Kompensations- 21, Meß- 26, Istwert- 27 und Kontrollmeßschaltung 22 können auch in einer gemeinsamen elektronischen digitalen Schaltung integriert sein, dessen Meß- und Rechenschritte programmgesteuert sind.

## Patentansprüche

1. Vorrichtung zum Dosieren und pneumatischen Fördern von schüttfähigen Gütern (4) mit einem Vorsilo (1) mit daran befestigten Absperrmittel (2), an dem eine statische Kontrollmeßeinrichtung zur Nachkalibrierung der kontinuierlichen Dosierung mit mindestens einem verwogenen Kontrollbehälter (3) befestigt ist, wobei der Kontrollbehälter (3) mit mindestens einem Austrags- (5) und/oder Dosierorgan verbunden ist, durch das ein dosierter Austrag in eine pneumatische Förderleitung (12) erfolgt, **dadurch gekennzeichnet, daß** der Kontrollbehälter (3) eine Einlaßöffnung mit einem Einlaßquerschnitt aufweist, der etwa 70 % bis 100 % des Behälterquerschnitts entspricht und daß die Kontrollmeßeinrichtung mindestens einen Druckaufnehmer (P1,P2,P3) und eine elektrische Rechenschaltung (22) als Ausgleichsmittel enthält, durch die die Kraftwirkung auf die Kontrollwägung durch die Druckunterschiede zwischen der pneumatischen Förderleitung (12) und dem Absperrmittel (2) während der Kontrollmessung ausgeglichen und/oder kompensiert werden.

2. Vorrichtung nach Anspruch 1, **dadurch gekennzeichnet, daß** der Kontrollbehälter (3) zylinderförmig ausgebildet ist und oben über eine Gummimanschette (6) beweglich mit einem Absperrschieber (2) und unten mit einer Austrags- (5) oder Dosierzellenradschleuse (5, 25) verbunden ist.

3. Vorrichtung nach Anspruch 1 oder 2, **dadurch gekennzeichnet, daß** als Austrags- und Dosierorgan mindestens eine Zellenradschleuse (5, 25), und/oder Dosierrotor und/oder ein Schneckendosierer und/oder ein Coriolis-Durchflußmesser vorgesehen ist.

4. Vorrichtung nach einem der vorhergehenden Ansprüche, **dadurch gekennzeichnet, daß** in der Kontrollmeßeinrichtung als Ausgleichsmittel eine Druckausgleichsvorrichtung zwischen der Förderleitung (12) und dem Einlaßbereich des Kontrollbehälters (3) vorgesehen ist und aufgrund dieses Ausgleichsdruckwertes und der druckbeaufschlagten wirksamen Flächen in einer elektronischen Rechenschaltung (22) ein Korrekturwert gebildet wird, um den das statische Kontrollwägeergebnis oder die daraus errechnete Istförderstärke kompensiert wird.

5. Vorrichtung nach einem der vorhergehenden Ansprüche, **dadurch gekennzeichnet, daß** in der Kontrollmeßeinrichtung als Ausgleichsmittel vorzugsweise zwei Druckaufnehmer (P1, P2) vorgesehen sind, die den Druck an den druckbeaufschlagten wirksamen Flächen erfassen und einer elektronischen Rechenschaltung (22) zuführen, die aus den Druckwerten und den wirksamen Querschnittsflächen Korrekturwerte errechnet, um die das statische Gewichtsergebnis oder die daraus ermittelte Förderstärke korrigiert wird.

6. Vorrichtung nach einem der vorhergehenden Ansprüche, **dadurch gekennzeichnet, daß** in der Förderleitung (12) ein Druckaufnehmer (P3) vorgesehen ist, dessen Druckwert zur Ermittlung der Istförderstärke in einer elektronischen Rechenschaltung (20) dient und in einem Regelkreis (19) mit einer vorgegebenen Sollförderstärke verglichen wird, wobei eine Reglabweichung durch einen Regler (23) derart ausregelbar ist, daß dadurch die Austragsförderstärke des Dosierorgans (5) entsprechend veränderbar ist.

7. Vorrichtung nach einem der vorhergehenden Ansprüche 1 bis 5, **dadurch gekennzeichnet, daß** in der Förderleitung (12) eine Mikrowellen- oder Ultraschallaufnehmervorrichtung vorgesehen ist, die den Schüttgutanteil pro Förderquerschnittsfläche erfaßt und zur Ermittlung der Istförderstärke in einer elektronischen Rechenschaltung dient und in einem Regelkreis (19) mit einer vorgegebenen Sollförderstärke verglichen wird, wobei eine Reglabweichung durch einen Regler (23) derart ausregelbar ist, daß dadurch die Austragsförderstärke des Dosierorgans (5) entsprechend veränderbar ist.

8. Vorrichtung nach Anspruch 6, **dadurch gekennzeichnet, daß** die Rechenschaltung (21) zusätzlich mit den Druckaufnehmern P1, P2 verbunden ist und aus dessen Differenzwerten kompensierte Istförderstärkenwerte ermittelt, die als Führungsgröße des Regelkreises (19) dienen.

9. Vorrichtung nach einem der vorhergehenden Ansprüche, **dadurch gekennzeichnet, daß** zusätzlich zur Austragszellenradschleuse (5) noch mindestens eine weitere Zellenradschleuse (25) zur Druckentkopplung zum Vorsilo (1) und zur Förderleitung (12) vorgesehen ist, und die über eine Rohrleitung (24) miteinander verbunden sind und so gesteuert werden, daß die Dosierschleuse (25) stets kontinuierlich befüllbar ist.

10. Vorrichtung nach Anspruch 9, **dadurch gekennzeichnet, daß** die Dosierzellenradschleuse (25) mittels Wägezellen (7) kraftnebenschlußfrei verwogen gelagert ist und eine gravimetrische Dosiervorrichtung darstellt, deren Austragsförderstärke regelbar ist.

11. Vorrichtung nach Anspruch 10, **dadurch gekennzeichnet, daß** im Einlaß- (Füllrohr) und Auslaßbereich (Austragsrohr) jeweils ein Druckaufnehmer P1 und P2 vorgesehen sind, die mit einer elektronischen Rechenschaltung (21, 27) verbunden sind, die aus den Differenzwerten kompensierte Istförderstärkenwerte errechnet, die mindestens teilweise als Führungsgröße des Regelkreises (19) dienen.

12. Vorrichtung nach einem der vorhergehenden Ansprüche, **dadurch gekennzeichnet, daß** zusätzlich zur Austragszellenradschleuse (5) mindestens noch eine Coriolis-Durchflußmeßvorrichtung, ein Dosierrotor oder ein Schnekkendosierer vorgesehen ist.

13. Vorrichtung nach einem der vorhergehenden Ansprüche, **dadurch gekennzeichnet, daß** zur statischen Kontrollwägung der Kontrollbehälter (3), die Austragszellenradschleuse (5) und das Dosierorgan (25) auf Wägezellen (7) gelagert sind.

14. Vorrichtung zum Dosieren und pneumatischen Fördern von schüttfähigen Gütern mit einem Vorsilo (1) und damit verbundenem Kontrollbehälter (3) und anschließendes Austrags- (5) und/oder Dosierorgan (25), **dadurch gekennzeichnet, daß** der Kontrollbehälter (3) eine Einlaßöffnung mit einem Einlaßquerschnitt aufweist, der etwa 70 % bis 100 % des Behälterquerschnitts entspricht, und daß in der Förderleitung (12) mindestens ein Druckaufnehmer (P3), eine Mikrowellen- oder eine Ultraschallaufnehmervorrichtung vorgesehen ist, dessen Meßwerte sich linear zur eingebrachten Schüttgutmenge verhalten und aus denen in einer elektronischen Reihenschaltung (20) die Ist-Förderstärke ermittelt wird, mit dessen Hilfe eine vorgegebene Soll-Austragsförderstärke des Dosierorgane (5, 25) ausregelbar ist.

15. Vorrichtung nach Anspruch 14, **dadurch gekennzeichnet, daß** als Austrags- und Dosierorgan jeweils eine Zellenradschleuse (5, 25) vorgesehen ist, die mit einem Füllrohr (24) miteinander verbunden sind, wobei mindestens im Einlaß- und Auslaßbereich der Dosierschleuse (25) jeweils ein Druckaufnehmer P1 und P2 vorgesehen und die mit einer elektronischen Rechenschaltung (21, 27) verbunden sind, in der aus den Differenzwerten kompensierte Istförderstärkenwerte errechnet werden, die mindestens teilweise als Führungsgröße zur Regelung der Dosierschleuse (25) dienen.

## Claims

1. Device for feeding and pneumatic conveying of free flowing bulk materials (4) having a presilo (1) with attached shut-off means (2), to which a static calibration system is attached for the re-calibration of continuous feeding with at least one weighed check bin (3), the check bin (3) being connected with at least one discharge element (5) and/or feed element by means of which a controlled discharge is made into a pneumatic conveyor line (12), **characterized in that** the check bin (3) has an inlet opening with an inlet cross section which corresponds to approx. 70% to 100% of the bin cross section and that the calibration system includes at least one pressure transducer (P1, P2, P3) and one electronic computing circuit (22) as correction unit which corrects and/or compensates the effect of force on the check weighing due to pressure differences between the pneumatic conveyor line (12) and the shut-off means during the calibration measurement.

2. Device as per claim 1, **characterized in that** the check bin (3) is designed in a cylindrical way and that it is connected movably on the top with a shut-off gate (2) via a rubber sleeve (6) and on the bottom with a discharge element (5) or a starfeeder (5, 25).

3. Device as per claim 1 or 2, **characterized in that** at least one starfeeder (5, 25) and/or one feed rotor and/or one screw feeder and/or one Coriolis solid flow meter is provided as discharge and feed element.

4. Device as per one of the previous claims, **characterized in that** a pressure correction device is provided in the calibration system as correction means between the conveyor line (12) and the inlet area of the check bin (3) and that due to this pressure correction value and the effective areas which are applied with pressure, a correction value is calculated in an electronic computing circuit (22) by which the static check weighing result or the resulting actual feed rate is compensated.

5. Device as per one of the previous claims, **characterized in that** preferably two pressure transducers (P1, P2) are provided as correction means in the calibration system which acquire the pressure of the effective areas applied with pressure and transmit it to an electronic computing circuit (22) which calculates the correction values from the pressure values and the effective cross section areas by which the static weight result or the determined feed rate is corrected.

6. Device as per one of the previous claims, **characterized in that** a pressure transducer (P3) is provided in the conveyor line (12), the pressure value of which is used to determine the actual feed rate in an electronic computing circuit (20) and which is compared in a control loop (19) with a preset command feed rate, a deviation of the controlled variable being controllable by a controller (23) in such a way that the discharge feed rate of the discharge element (5) can be corrected respectively.

7. Device as per one of the previous claims 1 to 5, **characterized in that** a microwave device or an ultrasonic transducer is provided in the conveyor line (12) which acquires the portion of bulk material per feed cross section area and which is used for the determination of the actual feed rate in an electronic computing circuit, this bulk material is compared in a control loop (19) with a preset command feed rate, the deviation being controllable by a controller (23) in such a way that the discharge feed rate of the discharge element (5) can be corrected respectively.

8. Device as per claim 6, **characterized in that** the computing circuit (21) is connected in addition with the pressure transducers P1, P2 and that it determines the actual feed rate values compensated from its differential values, which are used as command variable of the control loop (19).

9. Device as per one of the previous claims, **characterized in that** in addition to the starfeeder (5) at least another starfeeder (25) is provided for the pressure decoupling to the presilo (1) and to the conveyor line (12) which are connected by a pipeline (24) and which are controlled in such a way that the starfeeder (25) can always be continuously filled.

10. Device as per claim 9, **characterized in that** the starfeeder (25) is supported, free from shunt forces, on load cells (7) and weighed and represents a gravimetric feeding device with a variable discharge rate.

11. Device as per claim 10, **characterized in that** a pressure transducer P1 and P2 each is provided in the inlet area (sprout) and the outlet area (discharge tube) which are connected by an electronic computing circuit (21, 27) that calculates compensated actual feed rate values from the differential values which are used at least in part as command variable of the control loop (19).

12. Device as per one of the previous claims, **characterized in that** at least one Coriolis solid flow meter, one feed rotor or one metering screw is provided in addition to the discharge starfeeder (5).

13. Device as per one of the previous claims, **characterized in that** the check bin (3), the discharge starfeeder (5) and the starfeeder (25) are supported on load cells (7) for static check weighing.

14. Device for feeding and pneumatic conveying of free flowing bulk materials with a presilo (1) which is connected to a check bin (3) and subsequently to a discharge element (5) and/or feed element (25), **characterized in that** the check bin (3) has a inlet opening with an inlet cross section which corresponds to approx. 70% to 100% of the bin cross section and that at least one pressure transducer (P3), one microwave device or one ultrasonic transducer device is provided in the conveyor line (12), the measured values of which are linear when compared with added bulk solids and of which the actual feed rate is determined by means of an electronic computing circuit (20) and with the help of which a preset command feed rate of the discharge element (5, 25) can be controlled.

15. Device as per claim 14, **characterized in that** a starfeeder (5, 25) each is provided as discharge and feeder element which are interconnected by means of a filling pipe (24) while at least in the inlet and the outlet area of the starfeeder (25) a pressure transducer each, P1 and P2, is provided which are connected with an electronic computing circuit (21, 27) in which actual feed rate values are calculated which are compensated from the differential values and which at least in part are used as command variable for the control of the starfeeder (25).

## Revendications

1. Dispositif de dosage et de transfert pneumatique de matériaux en vrac (4) ayant un silo préliminaire (1) avec, fixé au silo, un organe d'arrêt (2) auquel est fixé un dispositif de mesure de contrôle statique pour le réétalonnage du dosage continu, avec non moins d'un collecteur de contrôle pesé (3), où le collecteur de contrôle (3) est relié à non moins d'un organe d'extraction (5) et/ou de dosage, au moyen duquel est effectuée l'extraction dans une tuyauterie de transfert pneumatique (12) **caractérisé en ce que** le collecteur de contrôle (3) présente un orifice d'admission dont la section transversale d'entrée constitue environ 70% à 100 % de la section transversale du collecteur, et que, le dispositif de mesure de contrôle comprend comme élément de compensation au moins un capteur de pression (P1,P2,P3) et un circuit électrique de calcul (22), qui, pendant la mesure de contrôle, corrige et/ou compense l'effet dynamique sur la pesée de contrôle grâce aux différences de pression entre la tuyauterie de transfert pneumatique (12) et le dispositif d'arrêt (2).

2. Dispositif selon la revendication 1, **caractérisé en ce que** le collecteur de contrôle (3) de conformation cylindrique est relié à la partie supérieure avec un organe d'arrêt (2) au moyen d'une manchette en caoutchouc (6) mobile et, à la partie inférieure, avec un sas alvéolaire d'extraction ou de dosage (5, 25).

3. Dispositif selon la revendication 1 ou 2, **caractérisé en ce que** au moins un sas alvéolaire (5,25) et/ou un rotor de dosage, et/ou un doseur à vis sans fin, et/ou un débitmètre Coriolis est prévu en qualité d'organe d'extraction ou de dosage.

4. Dispositif selon l'une des revendications précédentes, **caractérisé en ce qu'** en qualité d'élément de correction, un dispositif de compensation de pression est prévu dans le dispositif de mesure de contrôle entre la tuyauterie de transfert (12) et la zone d'entrée du collecteur de contrôle (3) et qu'à la base de cette valeur de pression corrigée et des surfaces effectives soumises à la pression, une valeur corrigée est générée dans un circuit de calcul électronique (22), qui en compensera le résultat de la pesée de contrôle statique ou la valeur obtenue du débit réel qui en résulte.

5. Dispositif selon l'une des revendications précédentes, **caractérisé en ce que** comme moyen de compensation préférentiel, deux capteurs de pression (P1, P2) sont prévus dans le dispositif de mesure de contrôle pour saisir les surfaces effectives soumises à la pression et transmettre cette valeur dans un circuit de calcul électronique (22), qui calcule les valeurs corrigées à partir des valeurs de pression et des sections effectives, et en corrige le résultat du poids statique ou la valeur de calcul du débit réel qui en résulte.

6. Dispositif selon l'une des revendications précédentes, **caractérisé en ce que** un capteur de pression (P3) est prévu dans la conduite de transfert (12) dont la valeur de pression sert à déterminer le débit réel au moyen d'un circuit de calcul (20), valeur comparée ensuite dans un circuit de régulation (19) avec un débit de consigne, l'écart de régulation étant commandé par un régulateur (23) de telle manière, que le débit d'extraction de l'organe de dosage (5) est modifiable en conséquence.

7. Dispositif selon l'une des revendications de 1 à 5 précédentes, **caractérisé en ce qu'un** dispositif capteur à micro-ondes ou à ultrasons est prévu dans la conduite de transfert (12) qui saisit la part de matériau en vrac par section, et sert à déterminer au moyen d'un circuit de calcul le débit réel, qui est comparé ensuite dans un circuit de régulation (19) avec un débit de consigne, l'écart de régulation étant piloté par un régulateur (23) de telle manière, que le débit d'extraction de l'organe de dosage (5) est modifiable en conséquence.

8. Dispositif selon la revendication 6, **caractérisé en ce que** le circuit de calcul (21) se trouve en outre en liaison avec les capteurs de pression P1, P2, et établit à partir de leurs valeurs différentielles les valeurs réelles de débit, qui servent de grandeur de référence au circuit de régulation (19).

9. Dispositif selon l'une des revendications précédentes, **caractérisé en ce que,** en outre du sas alvéolaire d'extraction (5), au moins un autre sas alvéolaire (25) est encore prévu pour le découplage de la pression au silo préliminaire (1) et à la tuyauterie de transfert (12), reliés entre eux par une conduite tubulaire (24) et sont commandés de telle manière, que le sas alvéolaire (25) peut toujours être rempli en continu.

10. Dispositif selon la revendication 9, **caractérisé en ce que** le sas alvéolaire (25) étant posé en appui sur des capteurs dynamométriques à jauge de contrainte (7) est pesé sans forces parasites, et représente un dispositif de dosage gravimétrique dont de débit d'extraction est réglable.

11. Dispositif selon la revendication 10, **caractérisé en ce que** des capteurs de pression P1 et P2 sont prévus respectivement sur chaque zone, tant à l'entrée (tuyau de remplissage) qu'à l'extraction (tuyau d'extraction), et que chaque capteur est en liaison avec un circuit de calcul électronique (21, 27), qui, à partir des valeurs différentielles, calcule les valeurs compensées du débit réel, servant au moins partiellement de grandeur de référence au circuit de régulation (19).

12. Dispositif selon l'une des revendications précédentes, **caractérisé en ce qu'**en complément au sas alvéolaire (5), au moins un autre dispositif est prévu, un débitmètre à effet Coriolis, un rotor de dosage ou un doseur à vis sans fin.

13. Dispositif selon l'une des revendications précédentes, **caractérisé en ce que** pour le pesage statique de contrôle du collecteur de contrôle (3), le sas alvéolaire d'extraction (5) et le sas alvéolaire de dosage (25) étant montés en appui sur des capteurs dynamométriques à jauge de contrainte (7).

14. Dispositif de dosage et de transfert pneumatique de matériau en vrac comportant un silo préliminaire (1) et un collecteur de contrôle (3) en liaison avec le silo (1), et ensuite raccordé à un sas alvéolaire d'extraction (5) et/ou de dosage (25), **caractérisé en ce que** le collecteur de contrôle (3) présente un orifice d'entrée ayant une section d'admission qui correspond à environ 70 % à 100 % de la section du collecteur et que dans la tuyauterie de transfert (12) au moins un capteur de pression (P3), un dispositif à micro-ondes ou un dispositif à ultrasons est prévu, dont les valeurs de mesure sont linéaires par rapport à la masse chargée de matériau en vrac et à partir desquelles un circuit de calcul électronique (20) établit le débit réel, permettant la régulation du débit d'extraction de consigne prédéfini du sas alvéolaire (5, 25).

15. Dispositif selon la revendication 14, **caractérisé en ce que** les sas alvéolaires (5, 25) sont respectivement prévus en qualité d'organes d'extraction et de dosage, qui sont reliés entre eux par une tuyauterie de remplissage (24), où des capteurs de pression P1 et P2 sont respectivement prévus à la zone d'entrée et à la zone d'éxtraction du sas alvéolaire (25), ces capteurs de pression étant connectés à un circuit de calcul électronique (21, 27), où les valeurs différentielles de ces capteurs de pression servent au calcul des valeurs de débit réel compensé, utilisées au moins partiellement comme grandeur de référence pour la régulation du sas alvéolaire de dosage (25).
